Europäisches Patentamt

European Patent Office

Office européen des brevets

(11) Veröffentlichungsnummer: **0 153 466 B1**

(12) **EUROPÄISCHE PATENTSCHRIFT**

(45) Veröffentlichungstag der Patentschrift: **13.03.91**

(21) Anmeldenummer: **84115051.9**

(22) Anmeldetag: **10.12.84**

Die Akte enthält technische Angaben, die nach dem Eingang der Anmeldung eingereicht wurden und die nicht in dieser Patentschrift enthalten sind.

(51) Int. Cl.5: **G01S 1/08**, H04B 1/00, H04K 1/04, G01S 5/00, G01S 13/00, G01S 15/00, G01S 17/00

(54) Drahtlos arbeitendes Signalübertragungssystem.

(30) Priorität: **20.02.84 DE 3406083**

(43) Veröffentlichungstag der Anmeldung:
**04.09.85 Patentblatt 85/36**

(45) Bekanntmachung des Hinweises auf die Patenterteilung:
**13.03.91 Patentblatt 91/11**

(84) Benannte Vertragsstaaten:
**BE DE FR GB IT NL**

(56) Entgegenhaltungen:
**EP-A- 0 056 517**
**DE-A- 2 636 926**
**US-A- 4 114 153**

**Bulletin des Schweizerischen Elektrotechnischen Vereins u. des Verbandes Schweizerischer Elektrizitätswerke, 17/1982, 4.September 1982, Zürich J.SCHWEIZER "Messung der Ausbreitung von Spread-Spectrum-Signalen in der Schweiz" Seiten 922-927**

Dr.Ingo Wilmanns "Radar und Funknavigation, 1973, VOGEL-VERLAG, Würzburg, Seiten 10-13, 22-29, 105-119

Peter Honold "Sekundär-Radar" 1971, Siemens AG, Berlin u. München, Seiten 48-54

(73) Patentinhaber: **Siemens Aktiengesellschaft Wittelsbacherplatz 2 W-8000 München 2(DE)**

(72) Erfinder: **Baier, Paul Walter, Prof. Dr.-Ing. Burgunderstrasse 6 W-6750 Kaiserslautern 32(DE)**
Erfinder: **Rausch, Peter, Dipl.-Ing. Konrad-Adenauer-Strasse 17 W-6750 Kaiserlautern(DE)**

**Beschreibung**

Die Erfindung bezieht sich auf ein drahtlos arbeitendes Signalübertragungssystem zur Übertragung breitbandiger Signale von einem Sender zu einem Empfänger mit einem Wandler im Sender und einem Wandler im Empfänger, von denen einer oder aber beide Wandler ein nichtisotropes Strahlungsverhalten aufweisen, und mit einer Detektorschaltung im Empfänger, die feststellt, ob die keine richtungsdefinierenden Codierungsmerkmale enthaltenden, empfangenen Signale auf die Hauptkeule oder auf eine Nebenkeule des nichtisotropen Wandlers bzw. der nichtisotropen Wandler zurückgehen.

Bei gewissen Signalübertragungssystemen ist man daran interessiert, im Empfänger unabhängig von der Empfangsleistung und damit von der Entfernung zwischen dem Sender und dem Empfänger festzustellen, ob das Empfangssignal auf die Hauptkeule oder eine Nebenkeule des Wandlers bzw. der Wandler mit nichtisotropen Strahlungsverhalten zurückgeht. Bei einem Funksystem beispielsweise mit einer sendeseitig angeordneten Richtantenne und einer Empfangsantenne mit Rundstrahlcharakteristik wäre somit zu ermitteln, ob das Empfangssignal auf das über die Hauptkeule oder über eine Nebenkeule der Sendeantenne abgestrahlte Sendesignal zurückgeht.

Bisher wurde dieses Problem dadurch gelöst, daß man bei konstanter Sendeleistung das Sendesignal für eine gewisse Zeit über einen Wandler mit Rundstrahlcharakteristik und dann erst über den Wandler mit Richtcharakteristik abstrahlt. Ist die Empfangsleistung zunächst klein und dann groß, so ist die Hauptkeule des Sendewandlers auf die Empfangsantenne ausgerichtet. Ist die Empfangsleistung zunächst groß und dann klein, dann strahlt der Sendewandler mit seiner Hauptkeule an der Empfangsantenne vorbei. In diesem Zusammenhang wird auf das Buch von P.Honold: "Sekundär-Radar", Siemens AG., 1971, S.48-54 hingewiesen.

Aus EP-A-5651I7 ist es bei einem Navigationssignal-Übertragungsverfahren bekannt, den ausgesendeten Signalen eine Phasencodierung betreffend die Winkelinformation mitzugeben, so daß auch die emfangenen Signale zur Bestimmung von deren Herkunftsrichtung eine Phasenodierung aufweisen. Mit dieser bekannen Methode lassen sich auch Direktwegsignale und Umwegsignale auseinanderhalten.

Aufgabe der Erfindung ist es, eine Aussage über die jeweilige Ausrichtung des nichtisotropen Wandlers bzw. der nichtisotropen Wandler zueinander bei breitbandigen Sendersignalen zu gewinnen, ohne daß entweder ein umständlicher Vergleich von Empfangsleistungen, die von Wandlern mit Rundstrahl- und Richtcharakteristik stammen, oder aber eine eigene, die Richtung betreffende Codierung erforderlich ist. So soll z.B. durch die Erfindung die Diskriminierung zwischen Haupt- und Nebenkeulenempfang im Empfänger in solchen Fällen ermöglicht werden, in denen das mit einer Richtantenne abgestrahlte Sendesignal breitbandig ist.

Gemäß der Erfindung, die sich auf ein Signalübertragungssystem der eingangs genannten Art bezieht, wird diese Aufgabe dadurch gelöst, daß in der Detektorschaltung nicht die Amplitude bzw. die Leistung der empfangenen Signale ausgewertet, sondern das Frequenzverhalten betreffende Parameter, wie z.B. die Kurvenform, das Spektrum, die Dauer oder die Wahrscheinlichkeitsdichtefunktion ermittelt oder geschätzt werden, daß die Detektorschaltung eine Schwellenwert-Diskriminierungseinrichtung enthält, in der analytisch festgestellt wird, ob und/oder wie sehr einer oder mehrere dieser Parameter der empfangenen Signale von den entsprechenden Parametern der gesendeten Signale abweichen, und daß ab einem vorher festgelegten Abweichungsgrad auf Empfang über einen Nebenkeulen-Übertragungsweg entschieden wird. Die Erfindung geht somit von der Erkenntnis aus, daß bei der Sendung eines breitbandigen Signals die Eigenschaften des empfangenen Signals von der Winkellage des nichtisotropen Wandlers bzw. der nichtisotropen Wandler zueinander abhängt, wobei entweder der Wandler des Senders oder des Empfängers oder aber beide Wandler ein nichtisotropes Strahlungsverhalten aufweisen.

Beim Signalübertragungssystem nach der Erfindung kann es sich um ein Funksystem handeln, dessen Wandler dann Antennen sind, oder um ein akustisches System, dessen Wandler durch Lautsprecher und Mikrofone gebildet werden, oder aber um ein optisches System.

In jedem Fall lassen sich mittels des Systems nach der Erfindung Nachrichten übertragen. Besonders vorteilhaft ist die Ausbildung des Signalübertragungssystems nach der Erfindung als sogenanntes störunterdrückendes Nachrichtenübertragungssystem, bei welchem das Basisbandsignal außer einer konventionellen schmalbandigen Modulation zusätzlich noch einer bandspreizenden Modulation unterworfen ist. Diese bandspreizende Modulation kann eine pseudozufällige Phasensprungmodulation (PN-PSK) sein.

Mittels einer zusätzlichen Einrichtung im Empfänger kann aus einem im gesendeten Signal codierten Sendezeitpunkt durch Ermitteln der Signallaufzeit die Entfernung zwischen Sende- und Empfangsort bestimmt werden. Mittels einer anderen zusätzlichen Einrichtung im Empfänger läßt sich das gesendete Signal mit einem von einem anderen Ort gesendeten Signal vergleichen, so daß durch Ermittlung der Laufzeitdifferenz der Signale die Entfernung zwischen einem Sendeort und dem Empfangsort bestimmt wird. Mittels einer anderen zusätzlichen Einrichtung im Empfänger kann die Phasenlage des Empfangssignals und damit die Entfernung zwischen Sende- und Empfangsort bestimmt werden. Eine weitere zusätzliche Einrichtung im Empfänger, welche die Phasenlage des von einem Sendeort empfangenen Signals mit der Phasenlage des von einem anderen Sendeort empfangenen Signals vergleicht, ermöglicht eine Bestimmung der Entfernung zwischen einem Sendeort und dem Empfangsort durch Bestimmung der Phasendifferenz. In einer anderen zusätzlichen Einrichtung im Empfänger läßt sich aus der Dopplerverschiebung die Relativgeschwindigkeit zwischen dem Sender und dem Empfänger bestimmen.

Besonders vorteilhaft ist bei der Erfindung die Tatsache, daß mit den übertragenen Signalen simultan eine Nachrichtenübertragung und eine Gewinnung einer Richtungs- und/oder Ortsinformation möglich ist.

Eine zweckmäßige Weiterbildung der Erfindung besteht darin, daß mittels einer zusätzlichen Einrichtung im Empfänger Maßnahmen, z.B. eine Nachintegration, zur Reduzierung der Fehlerwahrscheinlichkeiten bei der Richtungsbestimmung und/oder Entfernungsbestimmung und/oder Geschwindigkeitsbestimmung getroffen werden.

Durch eine zusätzliche Einrichtung im Empfänger läßt sich der Empfang auf einer Nebenkeule unterdrücken, so daß sich durch eine Anwahl ein in einer bestimmten Richtung oder ein in einer bestimmten Richtung und Entfernung befindlicher Empfänger bzw. Sender exklusiv auswählen läßt;

Die Erfindung wird im folgenden anhand von dreizehn Figuren erläutert.

Es zeigen:

Fig. 1 die Schaltungsstruktur eines mit Bandspreizung arbeitenden Nachrichtenübertragungssystems (Spread-Spectrum-System) zur Übertragung binärer Nachrichten,

Fig. 2 einen Flächenstrahler als Sendeantenne mit horizontaler Richtcharakteristik und die Lage eines Empfängers in der Haupt- bzw. Nebenstrahlrichtung,

Fig. 3 und 4 Übertragungsfunktionen, wie sie der Empfänger sieht, für den Fall, daß der Empfänger in einem Hauptmaximum (Fig.3) bzw. in einem Nebenmaximum (Fig.4) ist,

Fig. 5 und 6 normierte Einhüllende der Korrelationsfunktion als Funktion der Zeit bei Empfang im Hauptmaximum (Fig.5) bzw. in einem Nebenmaximum (Fig.6),

Fig. 7 das Prinzipschaltbild einer möglichen Detektoreinrichtung nach der Erfindung zur Diskriminierung dahingehend, ob Nebenkeulen- oder Hauptkeulenempfang stattfindet,

Fig. 8 und 9 zwei Beispiele von normierten Wahrscheinlichkeitsdichtefunktionen für Empfang im Hauptmaximum bzw. in verschiedenen Nebenmaxima,

Fig. 10 und 11 jeweils eine Funktionsdarstellung der Entdeckungswahrscheinlichkeiten für das Hauptmaximum bzw. verschiedene Nebenmaxima, jeweils in Abhängigkeit von der Höhe der Diskriminierungsschwelle,

Fig. 12 und 13 in jeweils einer Funktionsdarstellung die Entdeckungswahrscheinlichkeit für Empfang im Hauptmaximum und in verschiedenen Nebenmaxima jeweils in Abhängigkeit von der Sendemittenfrequenz mit der Chipdauer als Parameter.

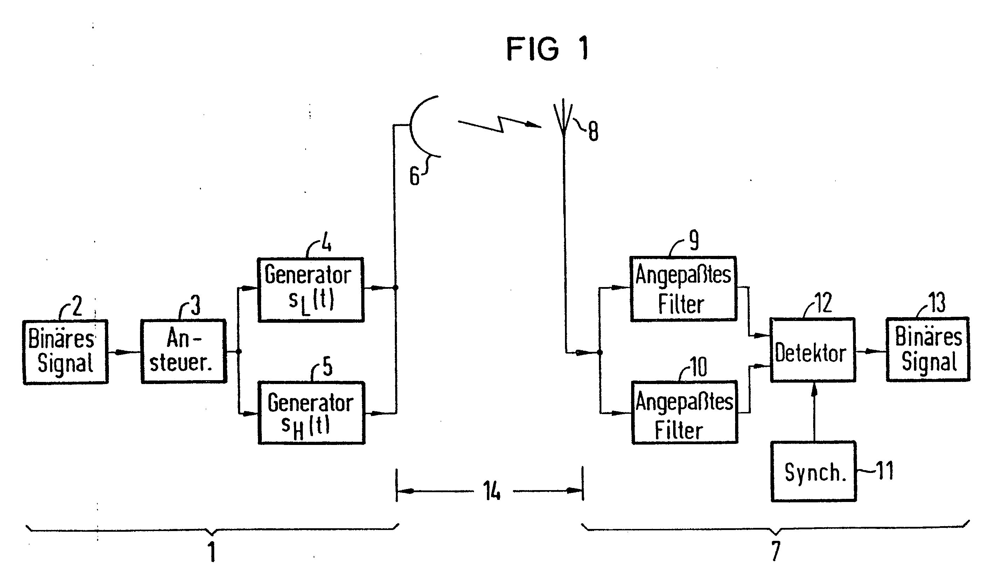

Fig. 1 zeigt die schaltungsmäßige Struktur eines bekannten Übertragungssystems zur Übertragung binärer Nachrichten, das mit zusätzlicher bandspreizender Modulation arbeitet (sogenanntes Spread-Spectrum-System). In einem Sender 1 wird dem Ausgangssignal einer binären Nachrichtenquelle 2 im Falle log.L die Spread-Spectrum-Signalform $s_L(t)$, im Falle log. H die Spread-Spectrum-Signalform $s_H(t)$ als sendesignal zugeordnet. Die Erzeugung dieser beiden Signalformen erfolgt mittels einer Ansteuereinrichtung 3, welche - je nach Vorliegen entweder von log. L oder log. H - einen Generator 4 für die Signalform $s_L(t)$ oder einen Generator 5 für die Signalform $s_H(t)$ ansteuert. Die Signalformen $s_L(t)$ bzw. $s_H(t)$ werden über eine Richtantenne 6 abgestrahlt. Im Fernfeld der Sendeantenne 6 befindet sich ein Empfänger 7, dessen Empfangsantenne 8 eine Rundstrahlcharakteristik habe. Der Empfänger 7 besteht außer aus der Antenne 8 noch aus zwei daran angeschlossenen, an die Signalformen $s_L(t)$ bzw. $s_H(t)$ angepaßten Filtern 9 bzw. 10, einer von einer Synchronisiereinrichtung 11 gesteuerten Detektionseinrichtung 12 und einer Einrichtung 13 zur Wiedergabe des übertragenen binären Nachrichtensignals. Je nachdem, ob die Signalform $s_L(t)$ bzw. $s_H(t)$ empfangen wird, erhält man am Ausgang des an $s_L(t)$ bzw. des an $s_H(t)$ angepaßten Filters 9 bzw. 10 eine Korrelationsspitze und von der Detektionseinrichtung 12 wird an die Einrichtung 13 log.L bzw. log.H weitergegeben.

Im folgenden wird davon ausgegangen, daß die Signalformen $s_L(t)$ und $s_H(t)$ durch die pseudozufällige $0/180°$-Phasensprungmodulation einer Trägerschwingung nach Maßgabe der Pseudozufallsfunktionen $p_L(t) \in \{-1,1\}$ bzw. $p_H(t) \epsilon (-1,1)$ entstehen, wobei $p_L(t)$ und $p_H(t)$ die Chipdauer $T_c$ und die Chipzahl L haben. Die Spread-Spectrum-Signalformen können dann in der Form

$$s_L(t) = A \, rect \left(\frac{t}{T}\right) \, p_L(t) \, \cos\left(2\pi f_o t + \varphi_L\right) \qquad (1)$$

bzw.

$$s_H(t) = A \, rect \left(\frac{t}{T}\right) \, p_H(t) \, \cos\left(2\pi f_o t + \varphi_H\right) \qquad (2)$$

dargestellt werden.

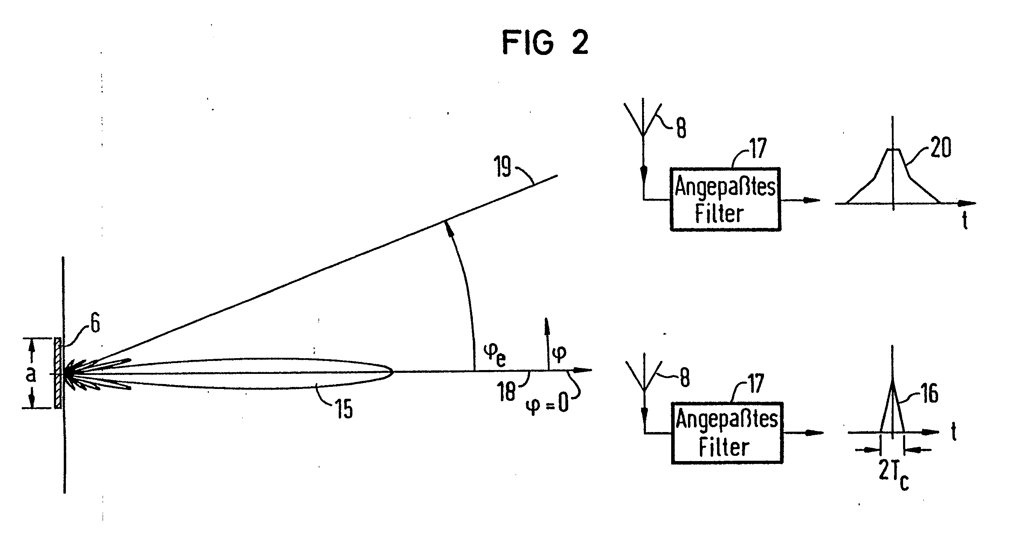

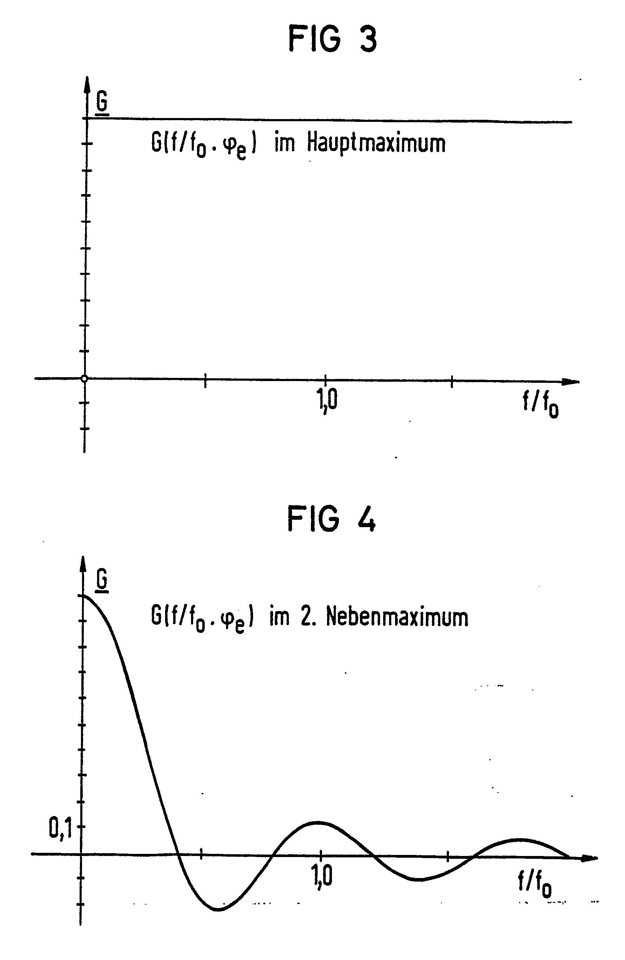

Im folgenden wird auch noch auf Fig.2 Bezug genommen. Die Sendeantenne 6 sei ein homogen belegter Flächenstrahler der Breite a. Vernachlässigt man parasitäre Effekte, haben die erwünschten Korrelationsspitzen bei Empfang über die Hauptkeule 15 der Sendeantenne eine dreieckförmige Einhüllende 16 mit der Basisbreite $2T_c$.

Als Übertragungskanal wird im folgenden die Strecke 14 vom Eingang der Sendeantenne 6 bis zum Ausgang der Empfangsantenne 8 bezeichnet. In einem Modell dieses Übertragungskanals wird für die Sendeantenne 6 hierbei ein Kugelkoordinatensystem mit den Koordinaten $\tau$, $\phi$ $\vartheta$ verwendet. Es zeigt sich, daß die Übertragungsfunktion des Übertragungskanals 14 abhängt von der Winkellage der Empfangsantenne 8 bzw. der in Richtung $\vartheta = 90°$, $\phi = 0°$ angenommenen Hauptstrahlrichtung der Sendeantenne 6. Beschränkt man die Betrachtungen auf die Horizontalebene $\vartheta = 90°$, so hängt die Übertragungsfunktion ab vom Horizontalwinkel $\phi_e$, den die Empfangsantenne 8 mit der Hauptstrahlrichtung $\phi = 0$ der Sendeantenne 6 einschließt. Die Übertragungsfunktion ist also eine Funktion der Frequenz f und des Winkels $\phi_e$ und wird deshalb im folgenden mit $\underline{G}(f, \phi_e)$ bezeichnet. Die Abhängigkeit von $\phi_e$ ist hierbei so zu verstehen, daß sich die Übertragungsfunktionen für verschiedene Richtungen $\phi_e$ nicht durch Multiplikation mit einem konstanten Faktor ineinander überführen lassen. Fig. 2 zeigt als Beispiel die horizontale Richtcharakteristik eines als Sendeantenne 6 verwendeten Flächenstrahlers und einen vereinfachend auf ein einziges signalangepaßtes Filter 17 reduzierten Empfänger, der sich einmal in einer mit 18 bezeichneten Hauptstrahlrichtung ($\phi_e = 0$), einmal in einer mit 19 bezeichneten Nebenstrahlrichtung ($\phi_e > 0$) der Sendeantenne 6 befindet. In Fig. 2 sind rechts auch typische Einhüllendenverläufe 16 und 20 der Korrelationsfunktionen dargestellt, wobei der Verlauf 16 für Hauptkeulenempfang und der Verlauf 20 für Nebenkeulenempfang zutrifft. Der Maßstab der Richtcharakteristik ist in Ordinatenrichtung um den Faktor 10 gedehnt, damit die Nebenkeulen erkennbar sind.

Aufgrund der Symmetrieeigenschaften der Sendeantennenrichtcharakteristik genügt es, die Eigenschaften von $\underline{G}(f, \phi_e)$ für das Winkelintervall $0 < \phi_e < 90°$ zu untersuchen. Die Ergebnisse sind im folgenden kurz zusammengefaßt. Ist der Empfänger in Hauptstrahlrichtung ($\phi_e = 0$)' so kann für die Übertragungsfunktion

$$\underline{G}(f, 0) = 1 \qquad (3)$$

angesetzt werden. Ist der Empfänger außerhalb der Hauptstrahlrichtung ($\phi_e > 0$), so gilt mit der Mittenfrequenz $f_o$ des Übertragungssystems

$$\underline{G}(f, \varphi_e) = \frac{\sin\left[\pi \frac{a}{\lambda_o} \frac{f}{f_o} \sin \varphi_e\right]}{\pi \frac{a}{\lambda_o} \frac{f}{f_o} \sin \varphi_e} \, . \qquad (4)$$

Die Betrachtungen werden im folgenden auf solche Winkel $\phi_e > 0$, beschränkt, bei denen die Übertragungsfunktion $\underline{G}(f, \phi_e)$ unter der Voraussetzung $f = f_o$ und bezüglich einer Änderung von $\phi_e$ Maxima erreicht. Diese Richtungen $\phi_e$ sind die Richtungen $\phi = \phi_n$ der Nebenmaxima der Antennencharakteristik bei der Mittenfrequenz $f_o$. Mit dem Ordnung n des Nebenmaximums erhält man für

$$\varphi_e = \varphi_n \quad (n=1,2, \ldots)$$

$$\underline{G}(f, \varphi_e) = \underline{G}(f, \varphi_e = \varphi_n) = \frac{\sin\left[\pi \frac{f}{f_0}\left(n + \frac{1}{2}\right)\right]}{\pi \frac{f}{f_0}\left(n + \frac{1}{2}\right)} \tag{5}$$

Fig. 3 zeigt die Übertragungsfunktion G (f,0) nach (3). In Fig.4 ist exemplarisch die Übertragungsfunktion G - (f, $\phi_e$ = $\phi_2$) für den Fall dargestellt, daß der Empfänger im Nebenmaximum n = 2 ist. Vergleicht man die Fig. 3 und 4, so erkennt man die Abhängigkeit der Übertragungsfunktion G (f, $\phi_e$) von der Winkellage $\phi_e$ der Empfangsantenne 8 bezüglich der Hauptstrahlrichtung $\phi$ = 0 der Sendeantenne 6.

Im folgenden wird auf die Auswirkungen der Winkelabhängigkeit der Übertragungsfunktion G (f,$\phi_e$) des Übertragungskanals 14 auf die empfangsseitig gebildete Korrelations funktion der gesendeten PN-PSK-Signalform eingegangen.

Zunächst werde angenommen, daß der ungestörte Fall vorliegt. Ist der Empfänger mit seiner Antenne 8 im Hauptmaximum der Übertragungsfunktion, so hat die am Ausgang des signalangepaßten Filters 17 auftretende Korrelationsfunktion die zu erwartende dreieckförmige Einhüllende 16. Liegt aber Empfang in einem Nebenmaximum vor, d.h. ist $\phi_e$ = $\phi_n$, n = 1,2,..., so weicht diese Einhüllende, z.B. die Einhüllende 20, umso mehr von der Dreiecksform ab, je höher die Ordnung n des Nebenmaximums ist. Dieser Effekt ist umso ausgeprägter, je breitbandiger die Spread-Spectrum-Signalform ist. Er wird nach der Erfindung dazu benutzt, zwischen Haupt- und Nebenkeulen-empfang zu diskriminieren.

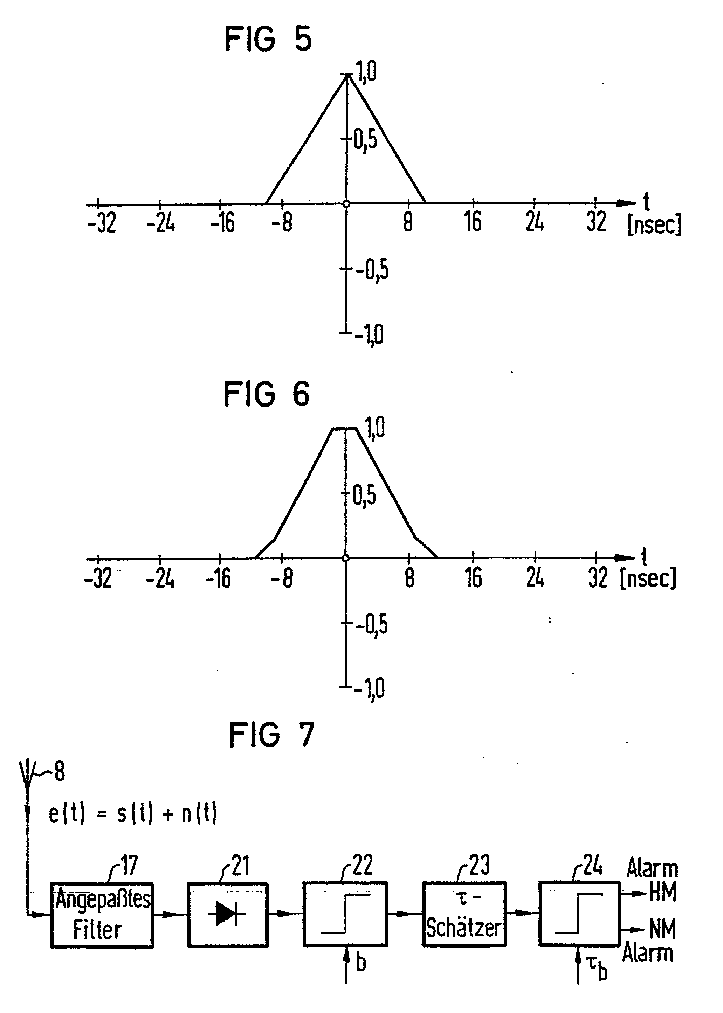

Die Fig. 5 und 6 zeigen für das Beispiel $T_c$ = 10 ns und $f_0$ = 1 GHz die Einhüllende der Korrelationsfunktion als Funktion der Zeit t. Fig.5 gilt für Empfang im Hauptmaximum ($\phi_e$ = 0), Fig. 6 für Empfang im Nebenmaximum n = 2. Fig. 6 zeigt deutlich die Abweichung der Korrelationsfunktion von der Dreiecksform.

Wie Fig. 5 und 6 zeigen, ist die Einhüllende der Korrelationsfunktion bei Nebenkeulenempfang gegenüber der Einhüllenden bei Hauptkeulenempfang abgeflacht und verbreitert Aufgrund dieses Effektes kann zwischen Nebenkeulenempfang und Hauptkeulenempfang diskriminiert werden.

Fig. 7 zeigt das Prinzipschaltbild einer Diskriminierungseinrichtung im Empfänger. Das Empfangssignal e(t) besteht aus einem Nutzsignal s(t) und einem Störsignal n(t), d.h.

$$e(t) = s(t) + n(t) . \tag{6}$$

Mit einem an die als Rundstrahler ausgebildete Empfangsantenne 8 angeschlossenen signalangepaßten Filter 17 und einem Hüllkurvengleichrichter 21 wird die Einhüllende der Korrelationsfunktion gewonnen. Eine erste Schwelle der Höhe b dient zur Detektion der Korrelationsspitze in einem Schwellwertdetektor 22. Diese Schwelle wird als Detektionsschwelle bezeichnet. Jedesmal, wenn die Detektionsschwelle aufgrund einer Korrelationsspitze überschritten wird, kann dann anhand einer zweiten Schwellenentscheidung mittels eines einem $\tau$-Schätzer 23 nachgeschalteten Schwellwertdetektors 24 ermittelt werden, ob die Dauer $\tau$ der Schwellenüberschreitung größer ist als ein vorgegebener Wert $\tau_b$. Diese zweite Schwelle wird als Diskriminierungsschwelle bezeichnet. Bei geeigneter Wahl der Höhe $\tau_b$ der Diskriminierungsschwelle kann mit Hilfe eines Hypothesentestes eine Entscheidung getroffen werden, ob Empfang im Hauptmaximum oder Empfang in einem Nebenmaximum vorliegt. Man entscheidet sich für folgende Hypothese:

- Es liegt Empfang im Hauptmaximum vor (= Alarm HM), falls die Schwellenüberschreitungsdauer $\tau$ kleiner als $\tau_b$ ist (Hypothese $H_H$)

$$H_H : \tau < \tau_b \tag{7}$$

- Es liegt Empfang in einem Nebenmaximum (Alarm NM) vor, falls die Schwellenüberschreitungsdauer $\tau$ größer oder gleich $\tau_b$ ist (Hypothese $H_N$)

$$H_N : \tau \geq \tau_b \tag{8}$$

Infolge des empfangenen Störsignals n(t) ist die Schwellenüberschreitungsdauer $\tau$ ein stochastischer Prozeß. Mit den Mitteln der statistischen Signaltheorie kann die Wahrscheinlichkeitsdichtefunktion $p_\tau$ $(\tau)$ dem Schwellenüberschreitungsdauer $\tau$ berechnet werden. Als Störsignal n(t) wird mittelwertfreies weißes Gaußrauschen der Varianz $\delta^2$ angenommen. Da das Störsignal ein Gaußprozeß ist, ist unter der Bedingung $\gamma \gg 1$ die Schwellenüberschreitungsdauer $\tau$ ebenfalls ein Gaußprozeß. Folglich ist $p_\tau(\tau)$ eine Gauß'sche Wahrscheinlichkeitsdichtefunktion.

Mit der Chipdauer $T_c$, der Sendemittenfrequenz $f_0$ und dem Signal-Stör-Verhältnis $\gamma$ in dB am Ausgang des signalangepaßten Filters ergibt sich bei Empfang im Hauptmaximum

$$p_\tau(\tau) = p_{\tau H}(\tau) = \frac{10^{0,05\gamma}}{T_c\sqrt{\pi}\left\{1 + \mathrm{erf}\left[10^{0,05\gamma}(1-b)\right]\right\}}\, \exp\left\{\frac{-10^{0,1\gamma}\left[\tau - 2T_c(1-b)\right]^2}{4T_c^2}\right\} \qquad (9)$$

Setzt man

$$X_1 = 10^{0,05\gamma}\,\frac{4f_0 T_c - b(4f_0 T_c - 2n - 1)}{4f_0 T_c - 2n - 1} \qquad (10)$$

so gilt für den Empfang in einem Nebenmaximum der Ordnung n

$$p_\tau(\tau) = p_{\tau N}(\tau) = \frac{4f_0 \cdot 10^{0,05\gamma}}{\sqrt{\pi}\left(4f_0 T_c - 2n - 1\right)\left[1 + \mathrm{erf}(x_1)\right]}\, \exp\left\{-4f_0^2 \cdot 10^{0,1\gamma}\,\frac{\left\{\tau - \frac{1}{2f_0}\left[4f_0 T_c - b(4f_0 T_c - 2n - 1)\right]\right\}^2}{(4f_0 T_c - 2n - 1)^2}\right\} \qquad (11)$$

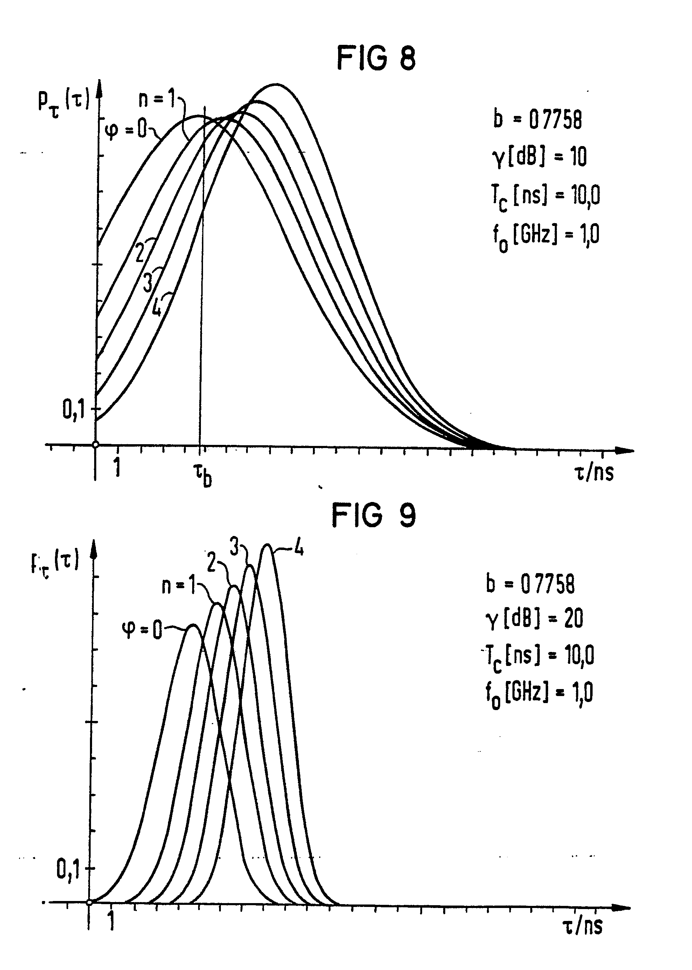

Die Fig.8 und 9 zeigen exemplarisch die normierten Wahrscheinlichkeitsdichtefunktionen $p_\tau(\tau)$ nach den Gleichungen (9) bzw. (11) für Empfang im Hauptmaximum bzw. in den Nebenmaxima der Ordnung n = 1 bis n = 4 als Funktion von $\tau$ . Parameter sind das Signal-Stör-Verhältnis $\gamma$, die Höhe b der Entdeckungsschwelle, die Chipdauer $T_c$ und die Sendemittenfrequenz $f_0$. Die jeweils verwendeten Parameter sind in den Figuren angegeben.

Bei vorgegebener Höhe $\tau_b$ der Diskriminierungsschwelle (Fig.8) können die Entdeckungswahrscheinlichkeiten für Empfang im Hauptmaximum bzw. Empfang in den Nebenmaxima durch Integration aus den Gleichungen (9) bzw. (11) berechnet werden. Mit Entdeckungswahrscheinlichkeit für Empfang im Hauptmaximum ist nicht die Entdeckungswahrscheinlichkeit gemeint, mit der nach der Detektion des Nutzsignals der Empfang im Hauptmaximum erkannt wird. Analoges gilt für die Entdeckungswahrscheinlichkeit für Empfang in einem Nebenmaximum. Man könnte in diesem Zusammenhang also auch von Erkennungswahrscheinlichkeit anstatt von Entdeckungswahrscheinlichkeit sprechen.

Die Wahrscheinlichkeit, daß auf Empfang im Hauptmaximum entschieden wird, wenn Empfang im Hauptmaximum vorliegt, wird mit $P_{do}$ bezeichnet. Es ist

$$P_{do} = P(\tau/H_H) = \int_0^{\tau_b} P_{TH}(\tau)\,d\tau =$$

$$= \frac{erf\left\{10^{0,05\,r}(1-b)\right\} + erf\left\{\frac{10^{0,05\,r}}{2T_c}\left[\tau_b - 2T_c(1-b)\right]\right\}}{1 + erf\left\{10^{0,05\,r}(1-b)\right\}} \qquad . (12)$$

Die Wahrscheinlichkeit, daß auf Empfang in einem Nebenmaximum entschieden wird, wenn Empfang in einem Nebenmaximum der Ordnung n vorliegt, wird mit $P_{dn}$ bezeichnet. Es ist mit $x_1$ nach der Gleichung (10)

$$P_{dn} = P(\tau/H_N) = \int^{\infty} P_{TN}(\tau)\,d\tau =$$

$$= \frac{1 - erf\left\{2f_0\,10^{0,05\,r}\,\frac{\tau_b - \frac{1}{4f_0}\left[4f_0T_c - b(4f_0T_c - 2n - 1)\right]}{4f_0T_c - 2n - 1}\right\}}{1 + erf(x_1)} \qquad (13)$$

Die Fehlerwahrscheinlichkeit, daß auf Empfang in einem Nebenmaximum entschieden wird, obwohl Empfang im Hauptmaximum vorliegt, wird mit $Q_o$ bezeichnet. Es ist mit $P_{do}$ nach (12)

$$Q_o = 1 - P_{do} \qquad . \qquad (14)$$

Die Fehlerwahrscheinlichkeit, daß auf Empfang im Hauptmaximum entschieden wird, obwohl Empfang in einem Nebenmaximum der Ordnung n vorliegt, wird mit $Q_n$ bezeichnet. Mit $P_{dn}$ nach (13) ist

$$Q_n = 1 - P_{dn} \qquad . \qquad (15)$$

Da die Fehlerwahrscheinlichkeiten $Q_o$ bzw. $Q_n$ durch Differenzbildung gemäß den Gleichungen (14) bzw. (15) aus den Entdeckungswahrscheinlichkeiten $P_{do}$ bzw. $P_{dn}$ hervorgehen, ist die numerische Auswertung der Ausdrücke (12) und (13) ausreichend. Die Fig, 10 und 11 zeigen exemplarisch den Verlauf der Entdeckungswahrscheinlichkeit $P_{do}$ nach (12) bei Empfang im Hauptmaximum und den Verlauf der Entdeckungswahrscheinlichkeiten $P_{dn}$ nach (13) bei Empfang in den Nebenmaxima der Ordnung n = 1 bis n = 4 jeweils als Funktion der Höhe $\tau_b$ der Diskriminierungsschwelle. Die jeweils eingesetzten Parameter sind in den Figuren angegeben.

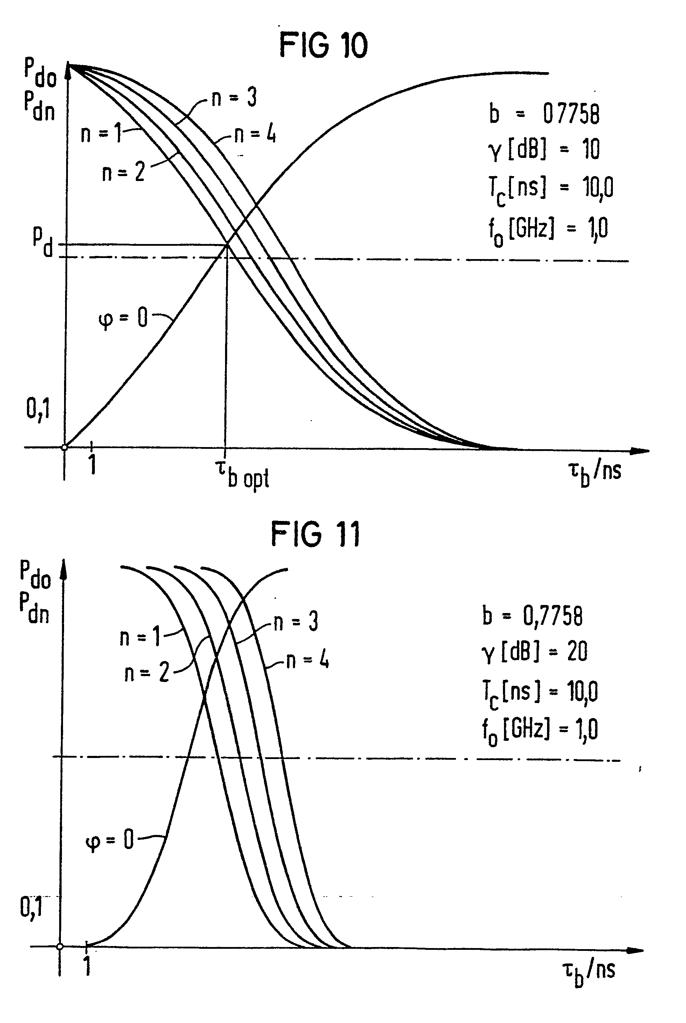

Von besonderem Interesse ist der Schnittpunkt von Pdo ($\tau_b$) und $P_{d1}$ ($\tau_b$). Der zu diesem Schnittpunkt gehörende Abszissenwert wird mit $\tau_{bopt}$ bezeichnet (Fig.10). Liegt Empfang im Hauptmaximum vor, so wird mit der Wahrscheinlichkeit $P_{do}$ ($\tau_{bopt}$) auf Empfang im Hauptmaximum entschieden. Liegt Empfang im Nebenmaximum n = 1 vor, so wird mit der Wahrscheinlichkeit $P_{d1}$ ($\tau_{bopt}$) auf Empfang im 1. Nebenmaximum entschieden. Im vorher erwähnten Schnittpunkt gilt aber, (siehe Fig.10)

$$P_{do}(\tau_{bopt}) = P_{d1}(\tau_{bopt}) = P_d \qquad (16)$$

so daß, je nachdem, ob die Hypothese $H_H$ bzw. $H_N$ nach (7) bzw. (8) wahr ist, beide Ereignisse mit der gleichen Wahrscheinlichkeit erkannt werden.

7

EP 0 153 466 B1

Analoges gilt jeweils für den Schnittpunkt von $P_{do}$ ($\tau_b$) und $P_{dn}(\tau_b)$, n > 1.

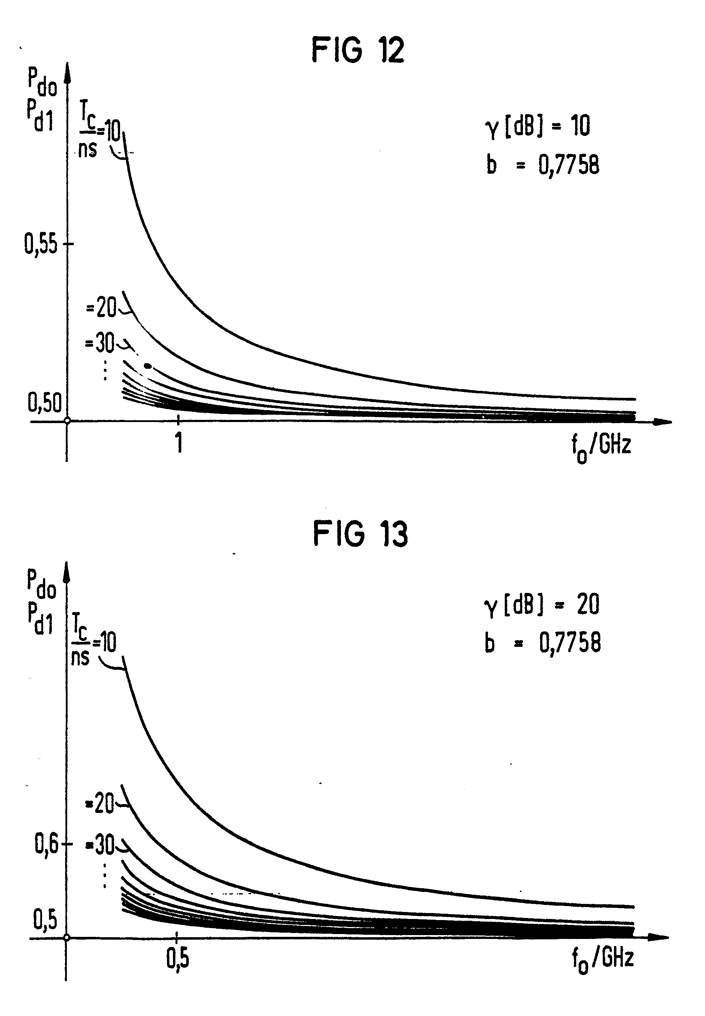

Da aber zu dem Schnittpunkt von $P_{do}$ ($\tau_b$) und $P_{d1}$ ($\tau_b$) die niedrigste Entdeckungswahrscheinlichkeit $P_d$ nach, (16) gehört, wurde dieser im Sinne einer Abschätzung des ungünstigsten Falles (worst case) näher untersucht. Einige Ergebnisse dieser Untersuchungen sind in den Fig. 12 und 13 zusammengestellt. Dort ist jeweils für $\tau_b = \tau_{bopt}$ die Entdeckungswahrscheinlichkeit $P_d$ nach (16) als Funktion der Sendemittenfrequenz $f_o$ dargestellt. Die verwendeten Werte der Parameter Signal-Stör-Verhältnis $\gamma$, Höhe b der Entdeckungsschwelle und Chipdauer $T_c$ sind in den Figuren angegeben.

Die so durch Beobachtung eines Einzelereignisses erzielten Entdeckungswahrscheinlichkeiten $P_d$ lassen sich in bestimmten Fällen durch Nachintegration noch erhöhen.

Im folgenden sind die in den vorstehenden Ausführungen verwendeten Formelzeichen aus Übersichtlichkeitsgründen noch aufgelistet.

| | |
|---|---|
| a | Breite des Flächenstrahlers |
| A | Amplitude der PN-PSK-Signalformen |
| b | Höhe der Entdeckungsschwelle |
| e(t) | Empfangssignal |
| f | Frequenz |
| $f_o$ | Sendemittenfrequenz |
| G ($f, \phi_e$) | Übertragungsfunktion des Übertragungskanals in der Horizontalebene |
| $\overline{H}_H$ | Hypothese, daß Empfang im Hauptmaximum vorliegt |
| $H_N$ | Hypothese, daß Empfang in einem Nebenmaximum vorliegt |
| n | Ordnung des betrachteten Nebenmaximums |
| n(t) | Störsignal |
| $p_\tau$ ($\tau$) | Wahrscheinlichkeitsdichtefunktion der Schwellenüberschreitungsdauer |
| $p_H(t)$ | Dem logischen Wert H zugeordnete Pseudozufallsfolge |
| $p_L(t)$ | Dem logischen Wert L zugeordnete Pseudozufallsfolge |
| $P_d$ | Entdeckungswahrscheinlichkeit bei der Worst-Case-Abschätzung |
| $P_{do}$ | Entdeckungswahrscheinlichkeit für den Empfang im Hauptmaximum |
| $P_{dn}$ | Entdeckungswahrscheinlichkeit für den Empfang im Nebenmaximum n |
| $Q_o, Q_n$ | Fehlerwahrscheinlichkeiten |
| $S_H(t)$ | PN-PSK-Signalform |
| $s_L(t)$ | PN-PSK-Signalform |
| t | Zeit |
| $T_c$ | Chipdauer |
| $\gamma$ | Signal-Stör-Verhältnis am Ausgang des signalangepaßten Filters in dB |
| $\phi_1 \; \phi_e$ | Horizontalwinkel |
| $\phi_L, \phi_H$ | Nullphasenwinkel der PN-PSK-Signalformen |
| $\lambda_o$ | Freiraumwellenlänge bei Sendemittenfrequenz $f_o$ |
| $\delta^2$ | Varianz des Störsignals |
| $\tau$ | Schwellenüberschreitungsdauer |
| $\tau_b$ | Höhe der Diskriminierungsschwelle |
| $\tau_{bopt}$ | Optimale Höhe der Diskriminierungsschwelle bei der Worst-Case-Abschätzung |
| $\vartheta$ | Vertikalwinkel |

17 Ansprüche
13 Figuren

## Ansprüche

1. Drahtlos arbeitendes Signalübertragungssystem zur Übertragung breitbandiger Signale von einem Sender (1) zu einem Empfänger (7) mit einem Wandler (6) im Sender und einem Wandler (8) im Empfänger, von denen einer oder aber beide Wandler ein nichtisotropes Strahlungsverhalten aufweisen, und mit einer Detektorschaltung (12) im Empfänger, die feststellt, ob die keine richtungsdefinierenden Codierungsmerkmale enthaltenden, empfangenen Signale auf die Hauptkeule (15) oder auf eine Nebenkeule (19) des nichtisotropen Wandlers bzw. der nichtisotropen Wandler zurückgehen, **dadurch gekennzeichnet, daß** in der Detektorschaltung (12) nicht die Amplitude bzw. die Leistung der empfangenen Signale ausgewertet, sondern das Frequenzverhalten betreffende Parameter, wie z.B. die Kurvenform, das Spektrum, die Dauer oder die Wahrscheinlichkeitsdichtefunktion ermittelt oder geschätzt werden, daß die Detektorschaltung eine Schwellenwert-Diskriminierungseinrichtung (22,23,24) enthält, in der analytisch festgestellt wird, ob und/oder wie sehr einer oder mehrere dieser Parameter der empfangenen Signale von den entsprechenden Parametern der gesendeten Signale abweichen, und daß ab einem vorher festgelegten Abweichungsgrad auf Empfang über einen Nebenkeulen-Übertragungsweg entschieden wird.

2. System nach Anspruch 1,
   **gekennzeichnet durch**
   eine Ausbildung als Funksystem, dessen Wandler Antennen (6,8) sind.

3. System nach Anspruch 1,
   **gekennzeichnet durch**
   eine Ausbildung als akustisches System, dessen Wandler Lautsprecher und Mikrofon sind.

4. System nach Anspruch 1,
   **gekennzeichnet durch**
   eine Ausbildung als optisches System.

5. System nach einem der vorhergehenden Ansprüche,
   **gekennzeichnet durch**
   die Verwendung als Nachrichtenübertragungssystem.

6. System nach Anspruch 5,
   **gekennzeichnet durch**
   eine Ausbildung als sogenanntes störunterdrückendes Nachrichtenübertragungssystem, bei dem das Basisbandsignal außer einer konventionellen schmalbandigen Modulation zusätzlich noch einer bandspreizenden Modulation unterworfen ist.

7. System nach Anspruch 6,
   **dadurch gekennzeichnet**
   daß die bandspreizende Modulation eine pseudozufällige Phasensprungmodulation (PN-PSK) ist.

8. System nach einem der vorhergehenden Ansprüche,
   **dadurch gekennzeichnet**
   daß die Detektorschaltung im Empfänger die Dauer der Überschreitung einer festgelegten Schwelle als richtungsinformationstragende Größe ermittelt und auswertet.

9. System nach Anspruch 8,
   **dadurch gekennzeichnet**
   daß mittels einer zusätzlichen Einrichtung des Empfängers die Winkellage ermittelt wird, in der der Empfänger vom Sender aus erscheint.

10. System nach einem der vorhergehenden Ansprüche,
    **dadurch gekennzeichnet**
    daß mittels einer zusätzlichen Einrichtung im Empfänger aus einem im gesendeten Signal codierten Sendezeitpunkt durch Ermitteln der Signallaufzeit die Entfernung zwischen Sande- und Empfangsort bestimmt wird.

11. System nach einem der vorhergehenden Ansprüche,
    **dadurch gekennzeichnet**
    daß mittels einer zusätzlichen Einrichtung im Empfänger das gesendete Signal mit einem von einem anderen Ort gesendeten Signal verglichen und durch Ermittlung der Laufzeitdifferenz der Signale die Entfernung zwischen einem Sendeort und dem Empfangsort bestimmt wird.

12. System nach einem der Ansprüche 1 bis 9,
    **dadurch gekennzeichnet**
    daß mittels einer zusätzlichen Einrichtung im Empfänger die Phasenlage des Empfangssignals und

9

damit die Entfernung zwischen dem Sande- und Empfangsort bestimmt wird.

13. System nach einem der Ansprüche 1 bis 9 oder Anspruch 12,
**dadurch gekennzeichnet**
daß eine zusätzliche Einrichtung im Empfänger die Phasenlage des von einem Sendeort empfangenen Signals mit der Phasenlage des von einem anderen Sendeort empfangenen Signals vergleicht, um durch Bestimmung der Phasendifferenz die Entfernung zwischen einem Sendeort und dem Empfangsort zu bestimmen.

14. System nach einem der vorhergehenden Ansprüche,
**dadurch gekennzeichnet**
daß in einer zusätzlichen Einrichtung im Empfänger aus der Dopplerverschiebung die Relativgeschwindigkeit zwischen dem Sender und dem Empfänger bestimmt wird.

15. System nach einem der vorhergehenden Ansprüche,
**dadurch gekennzeichnet**
daß mittels einer zusätzlichen Einrichtung im Empfänger Maßnahmen, z.B. eine Nachintegration zur Reduzierung der Fehlerwahrscheinlichkeiten bei der Richtungsbestimmung und/oder Entfernungsbestimmung und/ oder Geschwindigkeitsbestimmung getroffen werden.

16. System nach einem der vorhergehenden Ansprüche,
**dadurch gekennzeichnet**
daß durch eine zusätzliche Einrichtung der Empfang auf einer Strahlungsnebenkeule des Wandlers unterdrückt wird, um durch eine Anwahl einen in einer bestimmten Richtung oder einen in einer bestimmten Richtung und Entfernung befindlichen Empfänger bzw. Sender exklusiv auszuwählen.

## Claims

1. Wireless signal transmission system for transmitting broadband signals from a transmitter (1) to a receiver (7) with a transducer (6) in the transmitter and a transducer (8) in the receiver, of which one or both transducers exhibit a non-isotropic radiation characteristic and with a detector circuit (12) in the receiver which determines whether the received signals, not containing any direction-defining coding features, are based on the main beam (15) or on a side lobe (19) of the non-isotropic transducer or the non-isotropic transducers, characterized in that in the detector circuit (12) it is not the amplitude or the power of the received signals which are evaluated but parameters relating to the frequency characteristic such as, for example, the curve shape, the spectrum, the duration or the probability density function which are determined or estimated, in that the detector circuit contains a threshold discrimination device (22, 23, 24) in which it is analytically determined whether and/or how much one or more of these parameters of the received signals deviate from the corresponding parameters of the transmitted signals, and in that, as from a previously determined degree of deviation, a decision is made for reception via a side lobe transmission path.

2. System according to Claim 1, characterized by being constructed as a radio system, the transducers of which are antennas (6, 8).

3. System according to Claim 1, characterized by being constructed as an acoustical system, the transducers of which are a loudspeaker and a microphone.

4. System according to Claim 1, characterized by being constructed as an optical system.

5. System according to one of the preceding claims, characterized by being used as a message transmission system.

6. System according to Claim 5, characterized by being constructed as a so-called interference-suppressing message transmission system in which the baseband signal is additionally subjected to a band- spreading modulation in addition to a conventional narrow-band modulation.

7. System according to Claim 6, characterized in that the band-spreading modulation is a pseudo-random noise phase-shift keying modulation (PN-PSK).

8. System according to one of the preceding claims, characterized in that the detector circuit in the receiver determines and evaluates the duration of the transgression of a predetermined threshold as direction-information-carrying quantity.

9. System according to Claim 8, characterized in that the angular position, in which the receiver appears from the transmitter, is determined by means of an additional device of the receiver.

10. System according to one of the preceding claims, characterized in that the distance between transmitting and receiving site is determined by determining the signal transit time by means of an additional device in the receiver from a transmitting time coded in the transmitted signal.

11. System according to one of the preceding claims, characterized in that the transmitted signal is compared by means of an additional device in the receiver with a signal transmitted from a different site and the distance between a transmitting site and the receiving site is determined by determining the transit time difference between the signals.

12. System according to one of Claims 1 to 9, characterized in that the phase angle of the received signal and thus the distance between the transmitting site and the receiving site is determined by means of an additional device in the receiver.

13. System according to one of Claims 1 to 9 or Claim 12, characterized in that the phase angle of the signal received from a transmitting site is compared with the phase angle of the signal received from a different transmitting site by means of an additional device in the receiver in order to determine the distance between one transmitting site and the receiving site by determining the phase difference.

14. System according to one of the preceding claims, characterized in that the relative speed between the transmitter and the receiver is determined from the Doppler shift in an additional device in the receiver.

15. System according to one of the preceding claims, characterized in that measures, for example a post-integration for reducing the error probabilities in the direction determination and/or distance determination and/or speed determination are taken by means of an additional device in the receiver.

16. System according to one of the preceding claims, characterized in that the reception in a radiation side lobe of the transducer is suppressed by an additional device, in order to exclusively select a receiver or transmitter located in a particular direction or in a particular direction and at a particular distance by means of a selective choice.

**Revendications**

1. Système de transmission de signaux sans fil pour la transmission de signaux à large bande d'un émetteur (1) vers un récepteur (7), comportant un convertisseur (6) placé dans l'émetteur et un convertisseur (8) placé dans le récepteur, l'un des convertisseurs ou même ces deux convertisseurs possédant un comportement de rayonnement anisotrope, et un circuit de détection (12) placé dans le récepteur et qui détermine si les signaux reçus, qui ne contiennent aucune caractéristique de codage définissant la direction, se rapportent au lobe principal (15) ou à un lobe secondaire (19) du ou des convertisseurs anisotropes, caractérisé par le fait que l'amplitude ou la puissance des signaux reçus ne sont pas évaluées dans le circuit de détection (12), mais des paramètres concernant le comportement en fréquence, comme par exemple la forme de courbes, le spectre ou la durée ou la fonction de densité de probabilité sont déterminés ou évalués, que le circuit de détection contient un dispositif de discrimination à valeur de seuil (22,23,24), dans lequel est déterminé analytiquement si et/ou avec quelle ampleur un ou plusieurs de ces paramètres des signaux reçus s'écartent des paramètres correspondants des signaux émis, et qu'à partir d'un degré d'écart préalablement fixé, on en conclut à une réception par l'intermédiaire d'une voie de transmission correspondant à un lobe secondaire.

11

2. Système suivant la revendication 1, caractérisé par sa réalisation sous la forme d'un système radioélectrique, dont les convertisseurs sont des antennes (6,8).

3. Système suivant la revendication 1, caractérisé par sa réalisation sous la forme d'un système acoustique, dont les convertisseurs sont un haut-parleur et un microphone.

4. Système suivant la revendication 1, caractérisé par sa réalisation sous la forme d'un système optique.

5. Système suivant l'une des revendications précédentes, caractérisé par sa réalisation sous la forme d'un système de transmission d'informations.

6. Système suivant la revendication 5, caractérisé par sa réalisation sous la forme de ce qu'on appelle un système de transmission d'informations supprimant les parasites et dans lequel le signal de la bande de base est soumis non seulement à une modulation classique à bande étroite, mais également à une modulation élargissant la bande.

7. Système suivant la revendication 6, caractérisé par le fait que la modulation élargissant la bande est une modulation pseudo-aléatoire par saut de phase (PN/PSK).

8. Système suivant l'une des revendications précédentes, caractérisé par le fait que le circuit de détection présent dans le récepteur détermine et évalue la durée du dépassement d'un seuil fixé, en tant que grandeur contenant une information de direction.

9. Système suivant la revendication 8, caractérisé par le fait que la position angulaire, dans laquelle le récepteur apparaît pour l'émetteur, est déterminée au moyen d'un dispositif supplémentaire du récepteur.

10. Système suivant l'une des revendications précédentes, caractérisé par le fait que la distance entre le lieu d'émission et le lieu de réception est déterminée au moyen d'un dispositif supplémentaire situé dans le récepteur, à partir d'un instant d'émission codé dans le signal émis, par détermination du temps de propagation du signal.

11. Système suivant l'une des revendications précédentes, caractérisé par le fait que le signal émis est comparé à un signal émis en un autre endroit, au moyen d'un dispositif supplémentaire situé dans le récepteur et que la distance entre un lieu d'émission et le lieu de réception est déterminée au moyen de la détermination des différences entre les temps de propagation des signaux.

12. Système suivant l'une des revendications 1 à 9, caractérisé par le fait que la position de phase du signal de réception et par conséquent la distance entre le lieu d'émission et le lieu de réception sont déterminées au moyen d'un dispositif supplémentaire situé dans le récepteur.

13. Système suivant l'une des revendications 1 à 9 ou 12, caractérisé par le fait qu'un dispositif supplémentaire situé dans le récepteur compare la position de phase du signal reçu en un lieu d'émission à la position de phase du signal reçu en un autre lieu d'émission, pour déterminer la distance entre un lieu d'émission et le lieu de réception, par détermination de la différence de phase.

14. Système suivant l'une des revendications précédentes, caractérisé par le fait que la vitesse relative entre l'émetteur et le récepteur est déterminée dans un dispositif supplémentaire situé dans le récepteur, à partir du décalage Doppler.

15. Système suivant l'une des revendications précédentes, caractérisé par le fait que des dispositions, par exemple une post-intégration visant à réduire les probabilités d'erreurs lors de la détermination de la direction et/ou de la détermination de la distance et/ou de la détermination de la vitesse, sont prises par un dispositif supplémentaire situé dans le récepteur.

16. Système suivant l'une des revendications précédentes, caractérisé par le fait que la réception au niveau d'un lobe secondaire de rayonnement du convertisseur est supprimée par un dispositif supplémentaire, pour réaliser la sélection exclusive d'un récepteur ou d'un émetteur, qui est situé dans une direction déterminée ou dans une direction déterminée et à une distance déterminée.

# FIG 1

EP 0 153 466 B1

# FIG 2

EP 0 153 466 B1

# FIG 3

$G(f/f_0 . \varphi_e)$ im Hauptmaximum

# FIG 4

$G(f/f_0 . \varphi_e)$ im 2. Nebenmaximum

## FIG 5

## FIG 6

## FIG 7

$$e(t) = s(t) + n(t)$$

## FIG 8

$b = 0.7758$

$\gamma[dB] = 10$

$T_C[ns] = 10{,}0$

$f_0[GHz] = 1{,}0$

## FIG 9

$b = 0.7758$

$\gamma[dB] = 20$

$T_C[ns] = 10{,}0$

$f_0[GHz] = 1{,}0$

18

# FIG 10

$$P_{do}$$
$$P_{dn}$$

n = 3

n = 1

n = 4

n = 2

$$b = 0.7758$$
$$\gamma \, [dB] = 10$$
$$T_C \, [ns] = 10,0$$
$$f_0 \, [GHz] = 1,0$$

$$P_d$$

$$\varphi = 0$$

0,1

1    $$\tau_{b \, opt}$$    $$\tau_b / ns$$

# FIG 11

$$P_{do}$$
$$P_{dn}$$

n = 1

n = 3

n = 2

n = 4

$$b = 0,7758$$
$$\gamma \, [dB] = 20$$
$$T_C \, [ns] = 10,0$$
$$f_0 \, [GHz] = 1,0$$

$$\varphi = 0$$

0,1

1    $$\tau_b / ns$$

## FIG 12

$\gamma$ [dB] = 10
b = 0,7758

## FIG 13

$\gamma$ [dB] = 20
b = 0,7758